# EUROPÄISCHE PATENTSCHRIFT

(11) **EP 1 818 157 B1**
(45) Veröffentlichungstag und Bekanntmachung des Hinweises auf die Patenterteilung: **09.03.2011**
(21) Anmeldenummer: 07000962.6
(22) Anmeldetag: 18.01.2007
(51) Int. Cl.: B29C 49/42, B29C 49/30, B29C 49/04, B29C 49/32

(54) **Blasmaschine**
Extruder
Souffleuse

(30) Priorität: 09.02.2006 DE 102006006244
(43) Veröffentlichungstag der Anmeldung: 15.08.2007
(73) Patentinhaber: BEKUM Maschinenfabriken GmbH, D-12107 Berlin (DE)
(72) Erfinder: Hennemann, Ulrich, 3133 Traismauer (AT)
(74) Vertreter: Flosdorff, Jürgen

(56) Entgegenhaltungen:
- EP-A- 1 614 524
- WO-A-01/23164
- US-A- 5 288 224
- US-A1- 2003 091 683
- US-A1- 2004 155 386

## Beschreibung

Die Erfindung betrifft eine Blasmaschine mit einem Extruder mit einem Extrusionskopf, mit zwei Schließeinheiten, die jeweils eine obere Schließplatte mit der oberen Werkzeughälfte und eine untere Schließplatte mit der unteren Werkzeughälfte aufweisen, wobei die oberen Schließplatten mit den oberen Werkzeughälften vertikal bewegbar und die unteren Schließplatten mit den unteren Werkzeughälften horizontal zu einer Einlegevorrichtung unter dem Extrusionskopf verfahrbar sind und wobei die Einlegevorrichtung jeweils den aus dem Extrusionskopf ausgetretenen Vorformling in die dort befindliche untere Werkzeughälfte einlegt. Außerdem betrifft die Erfindung ein Verfahren zum Blasformen von vorzugsweise mehrfach gebogenen, röhrenförmigen Körpern aus Kunststoff unter Verwendung zweier Schließeinheiten.

Zur Herstellung von mehrfach gebogenen Rohren, deren Biegung in mehr als einer Ebene verläuft, hat sich zur Vermeidung eines großen Abfallanteils und der damit verbundenen Nachteile das sogenannte "Schlauch-Einlegeverfahren" oder auch "3-D-Verfahren" durchgesetzt.

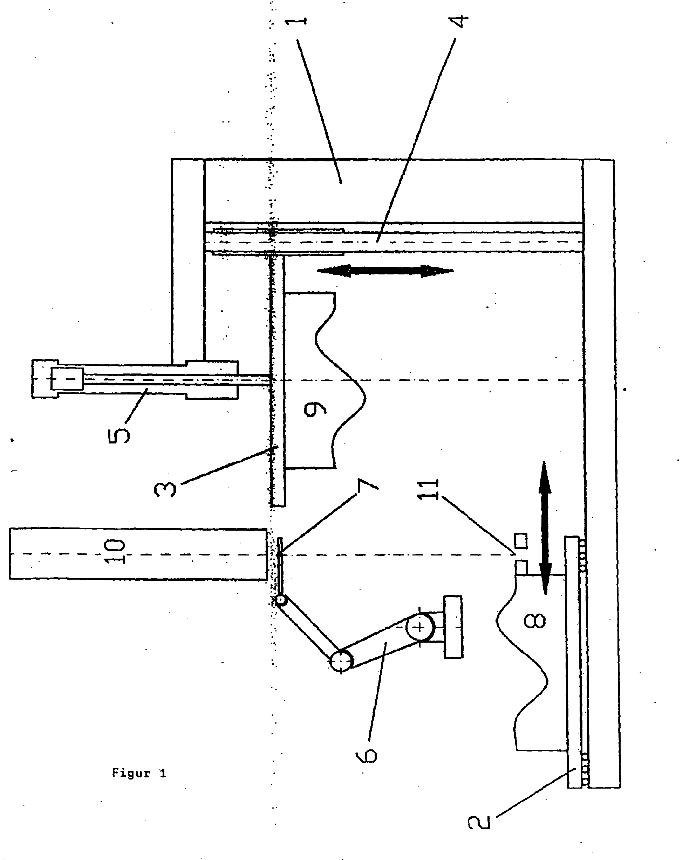

Figur 1 zeigt wesentliche Komponenten einer dazu verwendeten Blasmaschine. Die Maschine enthält neben dem bekannten Extrusionsteil, dem Extruder mit dem Extrusionskopf 10, eine oder zwei Schließeinheiten und eine Einlegevorrichtung 6.

Der Grundaufbau der Schließeinheit entspricht dem einer Presse: Es gibt einen Ständer 1 mit oben montiertem senkrecht wirkendem Hydraulikzylinder 5, zum vertikalen Bewegen einer oberen Schließplatte 3 mit der oberen Werkzeughälfte 9 entlang Führungen 4, und eine unten herausfahrbar angeordnete untere Schließplatte 2 mit der unteren Werkzeughälfte 8.

Die Einlegevorrichtung 6 ist üblicherweise ein mit einer Zange 7 versehener Industrieroboter.

Vor Beginn eines Produktionszyklus ist die obere Schließplatte 3 mit der oberen Werkzeughälfte 9 nach oben gefahren, die untere Schließplatte 2 mit der unteren Werkzeughälfte 8 darunter, die Zange 7 der Einlegevorrichtung 6 geöffnet dicht unterhalb der Düse des Extrusionskopfes 10, der Vorformling tritt aus der Düse aus. Die untere Schließplatte 2 wird nun komplett aus dem Bereich der Presse Richtung Extrusionskopf 10 herausgefahren. Wenn der Vorformling die erforderliche Länge erreicht hat, wird er durch die Zange 7 abgetrennt und soweit nach unten gefahren, bis sein unteres Ende von einem Aufnahmewerkzeug 11 der unteren Schließplatte 2 (Dorn oder Zange) fixiert ist. Nach einem Aspekt der vorliegenden Erfindung ist vorgesehen, daß die untere Schließplatte 2 während des Einlegevorgangs wieder zurück fährt und der Industrieroboter 6 dabei das obere Ende des Vorformlings entsprechend dem Verlauf des Formnestes bewegt. Nach Beendigung des Einlegevorgangs geht die Zange 7 wieder in Ausgangsposition unter den Extrusionskopf 10 und die untere Platte 2 fährt weiter, bis sie exakt unter der oberen Werkzeughälfte 9 positioniert ist. Das Werkzeug 8,9 wird geschlossen und bleibt in dieser Lage, bis das Rohr genügend Formstabilität zur Entformung aufgebaut hat. Dann fährt die obere Werkzeughälfte 9 nach oben und das Blasteil wird entnommen. Aus dieser Position beginnt der neue Zyklus.

Das Verfahren ist beispielsweise zur Produktion von Einfüllrohren für Kunststoff-Kraftstofftanks anwendbar. In diesem Fall kann das Rohr aus bis zu sieben Schichten unterschiedlicher Kunststoffe aufgebaut sein und die Extrusionseinheit der Produktionsmaschine ist entsprechend teuer. Hier lohnt sich der Einsatz einer "Doppelmaschine".

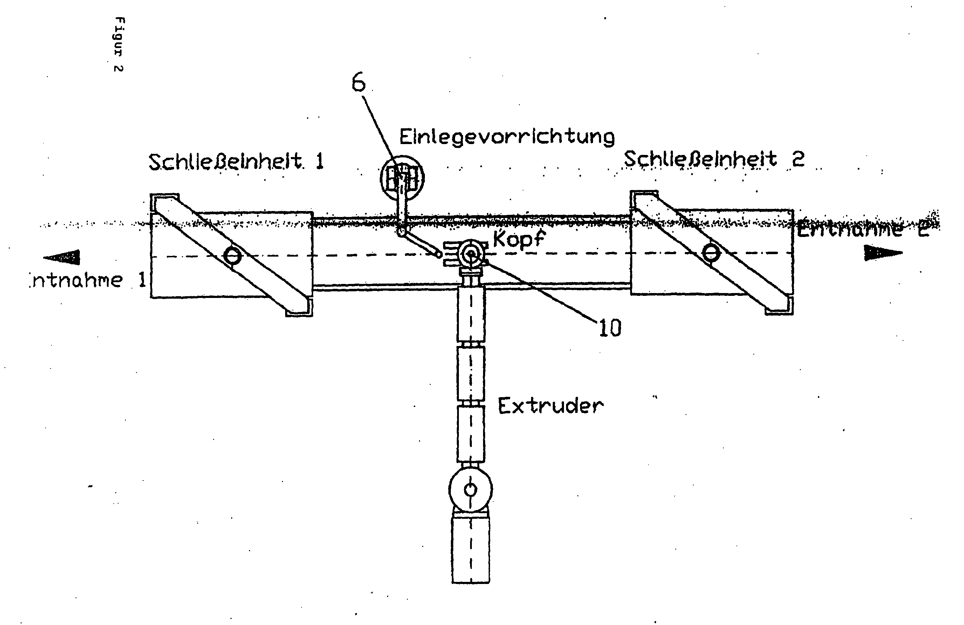

Bei einer derartigen "Doppelmaschine" können zwei Schließeinheiten so angeordnet sein, daß sie sich gegenüber stehen und daß jeweils abwechselnd die untere Schließplatte zum Extrusionskopf und wieder zurück unter die obere Schließplatte gefahren wird. Diese Aufstellung der Schließeinheiten führt zu einer verhältnismäßig breiten Maschine, die eine große Stellfläche benötigt, wie aus Figur 2 zu sehen ist. Die Blasteile werden jeweils rechts und links entnommen und müssen zur Endbearbeitung wieder zu einem gemeinsamen Ort gebracht werden.

Das Dokument US-A-5288224 offenbart eine Blasmachine gemäß dem Obergegriff des Anspruchs 1.

Der vorliegenden Erfindung liegt die Aufgabe zugrunde, eine kostengünstige Blasmaschine mit verbesserter Betriebweise anzugeben.

Diese Aufgabe wird erfindungsgemäß durch die Merkmale der Patentansprüche 1 und 8 gelöst. Vorteilhafte Ausgestaltungen der Erfindung sind in den abhängigen Ansprüchen gekennzeichnet.

Bei der erfindungsgemäßen Blasmaschine sind zwei Schließeinheiten entlang einer ersten Führungsbahn hin und her verfahrbar, die quer, vorzugsweise im rechten Winkel zu einer zweiten Führungsbahn verläuft, die von der ersten Führungsbahn zu der Einlegevorrichtung verläuft. Dabei sind die unteren Schließplatten der beiden Schließeinheiten abwechselnd auf der zweiten Führungsbahn zu der Einlegevorrichtung und zurück unter die zugehörige obere Schließplatte verfahrbar.

Weiter ist vorgesehen, daß etwa in der Mitte der ersten Führungsbahn eine gemeinsame Entnahmestation für die beiden Schließeinheiten mit der zugehörigen Entnahmevorrichtung und zu beiden Seiten davon jeweils eine Blasstation für eine zugehörige Schließeinheit angeordnet ist, wobei die zum Blasen erforderlichen Vorrichtungen auf der Schließeinheit mitfahren und hauptsächlich in der Blasstation zum Einsatz kommen. Die zwei Schließeinheiten sind vorzugsweise gemeinsam verfahrbar, derart, daß eine der Schließeinheiten an der Entnahmestation und die andere Schließeinheit an ihrer Blasstation positionierbar sind.

Das erfindungsgemäße Verfahren sieht folgende Schritte vor:
a) die untere Schließplatte mit der unteren Werkzeughälfte einer Schließeinheit wird bei deren geöffnetem Zustand von einer Entnahmeposition auf einer Führungsbahn unter den Extrusionskopf verfahren;
b) ein extrudierter Vorformling wird in die untere Werkzeughälfte gelegt, während die untere Schließplatte mit der unteren Werkzeughälfte unter die obere Schließplatte mit der oberen Werkzeughälfte zu der Entnahmeposition zurückgefahren wird;
c) die Schließeinheit wird geschlossen;
d) der Vorformling in der Schließeinheit wird an der zugehörigen Blasstation zu dem rohrförmigen Körper geblasen;
e) die Schließeinheit wird geöffnet und der rohrförmige Körper wird entnommen.
f) während die untere Schließplatte mit der unteren Werkzeughälfte der zweiten Schließeinheit unter dem Extrusionskopf verfahren und der nächste extrudierte Vorformling in die untere Werkzeughälfte gelegt und die untere Schließplatte zur Entnahmeposition zurückgefahren wird, wird der Vorformling in der ersten Schließeinheit an der ersten Blasstation zu dem rohrförmigen Körper geblasen;
g) die zweite Schließeinheit wird zu der zweiten Blasstation verfahren, während die erste Schließeinheit vorzugsweise gleichzeitig zu der Entnahmestation verfahren wird;
h) die erste Schließeinheit wird geöffnet und der rohrförmige Körper wird entnommen.

Die erfindungsgemäße Maschine benötigt bei der Anordnung von zwei Schließeinheiten eine besonders kleine Stellfläche. Da die Schließeinheiten zum Fertigblasen der rohrförmigen Körper jeweils nach rechts und links weggefahren werden, erfolgen die Funktionen "Einlegen" und "Entnehmen" immer an der gleichen Stelle, so daß die hierzu erforderlichen Vorrichtungen bei der erfindungsgemäßen Maschine nur einmal erforderlich sind. Im Unterschied zum herkömmlichen Verfahren sind zudem die Teilzeiten der Produktionsschritte für beide Schließeinheiten exakt gleich. Durch das Einlegen des Vorformlings in die zur oberen Werkzeughälfte zurückfahrenden untere Werkzeughälfte erfordert dieser Produktionsschritt wenig Zeit.

Es wird betont, dass die Erfindung nicht nur die in den Ansprüchen angegebenen Kombinationen von Merkmalen umfasst. Vielmehr können alle Merkmale einzeln auf alle Arten miteinander kombiniert werden.

Weitere Einzelheiten der Erfindung ergeben sich aus der nachfolgenden Beschreibung sowie anhand der Zeichnungen. Dabei zeigen:
- Figur 1: eine schematische Seitenansicht der Hauptkomponenten einer Blasmaschine zur Durchführung des sogenannten Schlauch-Einlege- verfahrens;
- Figur 2: eine rein schematische Aufsicht auf eine Ausführungsform mit zwei Schließeinheiten;
- Figur 3: eine rein schematische Aufsicht auf eine bevorzugte Ausführungs- form einer erfindungsgemäßen Blasmaschine.

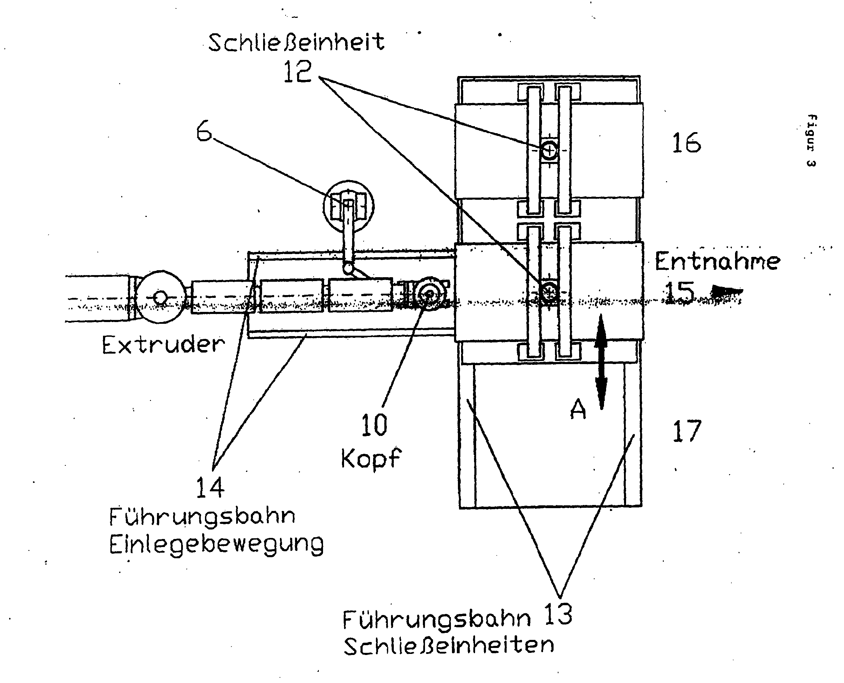

Figur 3 zeigt auf rein schematische Weise, daß zwei Schließeinheiten 12 nebeneinander auf einer Führungsbahn 13 angeordnet sind, auf der beide Schließeinheiten gemeinsam entlang eines Pfeils A hin und her bewegbar sind. Etwa in der Mitte der Führungsbahn 13 ist eine im rechten Winkel hierzu verlaufende zweite Führungsbahn 14 angeordnet, auf der die jeweils an einer Entnahmestation 15 angeordnete untere Schließplatte 2 unter die Einlegevorrichtung 6 fahrbar ist. Die Längsachse des Extruders 16 verläuft dabei parallel zu der Führungsbahn 14.

Auf der Führungsbahn 14 ist ein nicht dargestellter elektrisch angetriebener und mit der Steuerung der Einlegevorrichtung kontrollierter Wagen angeordnet, der mit der jeweiligen unteren Schließplatte 2 an der Entnahmestation 15 koppelbar ist und die untere Schließplatte 2 zur Einlegestation und zurück verfährt.

Die in Figur 3 obere Schließeinheit befindet sich an ihrer Blasstation 16. Wenn die obere Schließeinheit zur Entnahmestation 15 verfahren wird, gelangt die in der Darstellung untere Schließeinheit in ihre Blasstation 17 an dem in der Darstellung der Figur 3 unteren Ende der Führungsbahn 13.

Bei der erfindungsgemäßen Ausführungsform gemäß Figur 3 ergibt sich folgender Produktionsablauf: Grundstellung ist wie zu Figur 1 beschrieben (obere Werkzeughälfte 9 nach oben gefahren, untere Werkzeughälfte 8 darunter, Zange 7 der Einlegevorrichtung 6 geöffnet unter dem Kopf 10, Vorformling wird extrudiert). Auf der "Führungsbahn 14 Einlegebewegung" befindet sich in einer Position unter dem Kopf 10 ein Wagen, der durch die zuvor erfolgte seitliche Bewegung der beiden Schließeinheiten 12 über eine Kupplung mit der unteren Schließplatte 2 verbunden wurde. Der Wagen zieht die untere Schließplatte 2 mit unterer Formhälfte 8 so weit heraus, bis das in Figur 1 beschriebene Aufnahmewerkzeug 11 senkrecht unter dem Kopf 10 angekommen ist. Wenn der Vorformling die eingestellte Länge erreicht hat, wird er von der Zange 7 der Einlegevorrichtung 6 abgetrennt und mit seinem unteren Ende zum Aufnahmewerkzeug 11 gebracht. Der Wagen schiebt während des Einlegens die untere Schließplatte 2 und Formhälfte 8 bis zu einer Position senkrecht unter der oberen Schließplatte 3, die Form 12 schließt, die Zange 7 der Einlegevorrichtung 6 fährt unter den Kopf 10 und die beiden Schließeinheiten 12 fahren auf der "Führungsbahn 13 Schließeinheiten" zur anderen Seite. Dabei kuppelt zunächst die eine untere Schließplatte 2 vom Wagen ab. Wenn die Fahrt beendet ist, ist die andere Schließplatte 2 mit dem Wagen verbunden. Die Schließeinheit 12 öffnet und der Artikel wird entnommen. Jetzt ist die zweite Schließeinheit in Grundstellung und der Zyklus läuft genau wie oben beschrieben ab.

## Patentansprüche

1. Blasmaschine mit einem Extruder mit einem Extrusionskopf (10), mit zwei Schließeinheiten (12), die jeweils eine obere Schließplatte (3) mit der oberen Werkzeughälfte (9) und eine untere Schließplatte (2) mit der unteren Werkzeughälfte (8) aufweisen, wobei die oberen Schließplatten (3) mit den oberen Werkzeughälften (9) vertikal bewegbar und die unteren Schließplatten (2) mit den unteren Werkzeughälften (8) horizontal zu einer Einlegevorrichtung(6) unter dem Extrusionskopf (10) verfahrbar sind, wobei die Einlegevorrichtung (6) jeweils den aus dem Extrusionskopf (10) ausgetretenen Vorformling in die dort befindliche untere Werkzeughälfte (8) einlegt,
**dadurch gekennzeichnet,**
**daß** die zwei Schließeinheiten (12) entlang einer ersten Führungsbahn (13) hin und her verfahrbar sind, die quer zu einer zweiten Führungsbahn (14) verläuft, die von einer mittigen Entnahmeposition (15) der ersten Führungsbahn (13) zu der Einlegevorrichtung (6) verläuft, wobei die unteren Schließplatten (2) mit den unteren Werkzeughälften (8) der beiden Schließeinheiten (12) abwechselnd auf der zweiten Führungsbahn (14) von der Entnahmeposition (15) zu der Einlegevorrichtung (6) und zurück verfahrbar sind.

2. Blasmaschine nach Anspruch 1,
**dadurch gekennzeichnet,**
**daß** die erste Führungsbahn (13) im Bereich der mittigen Entnahmestation (15) mit der zweiten Führungsbahn (14) verbunden ist, daß Entnahmestation (15) und zweite Führungsbahn (14) miteinander fluchten, und daß zu beiden Seiten der Entnahmestation (15) jeweils eine Blasstation (16,17) angeordnet ist.

3. Blasmaschine nach Anspruch 1 oder 2,
**dadurch gekennzeichnet,**
**daß** die zwei Schließeinheiten (12) gemeinsam verfahrbar sind, derart, daß eine Schließeinheit an der Entnahmestation (15) und die andere Schließeinheit an ihrer Blasstation (16 oder 17) positionierbar sind.

4. Blasmaschine nach einem der Ansprüche 1 bis 3,
**dadurch gekennzeichnet,**
**daß** auf der zweiten Führungsbahn (14) ein Wagen angeordnet ist, der über eine Kupplung mit der an der Entnahmestation (15) angeordneten unteren Schließplatte (2) der jeweiligen Schließeinheit (12) verbindbar ist.

5. Blasmaschine nach einem der Ansprüche 1 bis 4,
**dadurch gekennzeichnet,**
**daß** an dem rückwärtigen Ende der beiden unteren Formhälften (8) jeweils ein Aufnahmewerkzeug (11) für den Vorformling angeordnet ist.

6. Blasmaschine nach Anspruch 5,
**dadurch gekennzeichnet,**
**daß** das Aufnahmewerkzeug (11) ein Dorn oder eine Zange ist, der bzw. die um etwa 90° schwenkbar sein kann.

7. Blasmaschine nach einem der Ansprüche 1 bis 6,
**dadurch gekennzeichnet,**
**daß** die Einlegevorrichtung (6) ein mit einer Zange (7) versehener Industrieroboter ist.

8. Verfahren zum Blasformen von vorzugsweise mehrfach gebogenen röhrenförmigen Körpern aus Kunststoff unter Verwendung zweier Schließeinheiten (12),
**gekennzeichnet durch** folgende Schritte:
a) die untere Schließplatte (2) mit der unteren Werkzeughälfte (8) einer ersten Schließeinheit (12) wird bei deren geöffnetem Zustand von einer Entnahmeposition (15) auf einer Führungsbahn (14) unter den Extrusionskopf (10) verfahren;
b) ein extrudierter Vorformling wird in die untere Werkzeughälfte (8) gelegt;
c) die untere Schließplatte (2) mit der unteren Werkzeughälfte (8) wird unter die obere Schließplatte (3) mit der oberen Werkzeughälfte (9) zu der Entnahmeposition (15) zurückgefahren;
d) die erste Schließeinheit (12) wird geschlossen;
e) auf einer quer zu der ersten Führungsbahn (14) verlaufenden, mit dieser verbundenen zweiten Führungsbahn (13) wird die erste Schließeinheit (12) zu ihrer Blasstation (16) verfahren, während vorzugsweise gleichzeitig die zweite Schließeinheit (12) aus ihrer Blasstation (17) zu der Entnahmestation (15) verfahren wird;
f) während die untere Schließplatte (2) mit der unteren Werkzeughälfte (8) der zweiten Schließeinheit (12) unter dem Extrusionskopf (10) verfahren und der nächste extrudierte Vorformling in die untere Werkzeughälfte (8) gelegt und die untere Schließplatte (2) zur Entnahmeposition (15) zurückgefahren wird, wird der Vorformling in der ersten Schließeinheit (12) an der ersten Blasstation (16) zu dem rohrförmigen Körper geblasen;
g) die zweite Schließeinheit (12) wird zu der zweiten Blasstation (17) verfahren, während die erste Schließeinheit (12) vorzugsweise gleichzeitig zu der Entnahmestation (15) verfahren wird;
h) die erste Schließeinheit (12) wird geöffnet und der rohrförmige Körper wird entnommen.

## Claims

1. A blow moulding machine including an extruder with an extrusion head (10) and two closure units (12), which each include an upper closure plate (3) with the upper tool half (9) and a lower closure plate (2) with the lower tool half (8), wherein the upper closure plates (3) with the upper tool halves (9) are vertically movable and the lower closure plates (2) with the lower tool halves (8) are movable horizontally to an insertion device (6) beneath the extrusion head (10), wherein the insertion device (6) inserts the preform discharged from the extrusion head (10) into the lower tool half (8) which is located there, **characterised in that** the two closure units (12) are movable back and forth along a first guide track (13), which extends transversely to a second guide track (14), which extends from a central removal position (15) on the first guide track (13) to the insertion device (6), wherein the lower closure plates (2) with the lower tool halves (8) of the two closure units (12) are movable alternately on the second guide track (14) from the removal position (15) to the insertion device (6) and back again.

2. A blow moulding machine as claimed in claim 1, **characterised in that** the first guide track (13) is connected in the vicinity of the central removal station (15) to the second guide track (14), that the removal station (15) and second guide track (14) are aligned with one another and that a respective blowing station (16, 17) is arranged on each side of the removal station (15).

3. A blow moulding machine as claimed in claim 1 or 2, **characterised in that** the two closure units (12) are movable together such that one closure unit is positionable at the removal station (15) and the other closure unit is positionable at its blow moulding station (16 or 17).

4. A blow moulding machine as claimed in one of claims 1 to 3, **characterised in that** arranged on the second guide track (14) there is a carriage, which is connectable via a coupling to the lower closure plate (2), which is disposed at the removal station (15), of the respective closure unit (12).

5. A blow moulding machine as claimed in one of claims 1 to 4, **characterised in that** arranged at the rear end of the two lower mould halves (8) there is a respective receiving tool (11) for the preform.

6. A blow moulding machine as claimed in claim 5, **characterised in that** the receiving tool (11) is a mandrel or a gripper, which can be pivotable through about 90°.

7. A blow moulding machine as claimed in one of claims 1 to 6, **characterised in that** the insertion device (6) is an industrial robot provided with a gripper (7).

8. A method of blow moulding tubular bodies, preferably with multiple bends, of plastic material using two closure units (12), **characterised by** the following steps:
a) the lower closure plate (2) with the lower tool half (8) of a first closure unit (12) is moved in its open state from a removal position (15) on a guide track (14) to below the extrusion head (10);
b) an extruded preform is positioned in the lower tool half (8);
c) the lower closure plate (2) with the lower tool half (8) is moved back below the lower closure plate (3) with the upper tool half (9) to the removal position (15).
d) the first closure unit (12) is closed;
e) the first closure unit (12) is moved to its blow moulding station (16) on a second guide track (13), which extends transverse to the first guide track (14) and is connected to it, whilst the second closure unit (12) is moved, preferably simultaneously, out of its blow moulding station (17) to the removal station (15);
f) whilst the lower closure plate (2) with the lower tool half (8) of the second closure unit (12) is moved beneath the extrusion head (10) and the next extruded preform is placed in the lower tool half (8) and the lower closure plate (2) is moved back to the removal position (15), the preform is blow moulded in the first closure unit (12) at the first blow moulding station (16) to form a tubular body.
g) the second closure unit (12) is moved to the second blow moulding station (17) whilst the first closure unit (12) is moved, preferably simultaneously, to the removal station (15);
h) the first closure unit (12) is opened and the tubular body is removed.

## Revendications

1. Souffleuse avec une extrudeuse dotée d'une tête d'extrusion (10), avec deux unités de fermeture (12) qui présentent respectivement une plaque de fermeture supérieure (3) avec la moitié d'outil supérieure (9) et une plaque de fermeture inférieure (2) avec la moitié d'outil inférieure (8), les plaques de fermeture supérieures (3) avec les moitiés d'outil supérieures (9) pouvant être déplacées verticalement et les plaques de fermeture inférieures (2) avec les moitiés d'outil inférieures (8)pouvant être déplacées horizontalement à un dispositif d'insertion (6) sous la tête d'extrusion (10), le dispositif d'insertion (6) insérant respectivement l'ébauche sortie de la tête d'extrusion (10) dans la moitié d'outil inférieure s'y trouvant (8), **caractérisée en ce**
**que** les deux unités de fermeture (12) peuvent être déplacées alternativement le long d'une première voie de guidage (13) qui s'étend transversalement à une seconde voie de guidage (14) qui s'étend d'une position de retrait centrale (15) de la première voie de guidage (13) au dispositif d'insertion (6), les plaques de fermeture inférieures (2) pouvant être déplacées et redéplacées avec les moitiés d'outil inférieures (8) des deux unités de fermeture (12) en alternance sur la seconde voie de guidage (14) de la position de retrait (15) au dispositif d'insertion (6).

2. Souffleuse selon la revendication 1,
**caractérisée en ce**
**que** la première voie de guidage (13) est reliée dans la zone du poste de retrait central (15) à la seconde voie de guidage (14), en ce que le poste de retrait (15) et la seconde voie de guidage (14) s'alignent l'un avec l'autre et en ce que des deux côtés du poste de retrait (15) est disposé respectivement un poste de soufflage (16, 17).

3. Souffleuse selon la revendication 1 ou 2,
**caractérisée en ce**
**que** les deux unités de fermeture (12) peuvent être déplacées ensemble de telle manière qu'une unité de fermeture puisse être positionnée sur le poste de retrait (15) et l'autre unité de fermeture sur son poste de soufflage (16 ou 17).

4. Souffleuse selon l'une quelconque des revendications 1 à 3,
**caractérisée en ce**
**qu'**un chariot qui peut être relié par un couplage à la plaque de fermeture inférieure (2) disposée sur le poste de retrait (15) de chaque unité de fermeture (12), est disposé sur la seconde voie de guidage (14).

5. Souffleuse selon l'une quelconque des revendications 1 à 4,
**caractérisée en ce**
**que** sur l'extrémité arrière des deux moitiés de moule inférieures (8) est disposé respectivement un outil de réception (11) pour l'ébauche.

6. Souffleuse selon la revendication 5,
**caractérisée en ce**
**que** l'outil de réception (11) est un mandrin ou une pince qui peut être pivotée d'environ 90°.

7. Souffleuse selon l'une quelconque des revendications 1 à 6,
**caractérisée en ce**
**que** le dispositif d'insertion (6) est un robot industriel pourvu d'une pince (7).

8. Procédé de formage par soufflage de corps tubulaires en plastique pliés de préférence à différentes reprises en utilisant deux unités de fermeture (12),
**caractérisé par** les étapes suivantes :
a) la plaque de fermeture inférieure (2) avec la moitié d'outil inférieure (8) d'une première unité de fermeture (12) est déplacée lors de son état ouvert d'une position de retrait (15) sur une voie de guidage (14) sous la tête d'extrusion (10) ;
b) une ébauche extrudée est placée dans la moitié d'outil inférieure (8) ;
c) la plaque de fermeture inférieure (2) avec la moitié d'outil inférieure (8) est redéplacée sous la plaque de fermeture supérieure (3) avec la moitié d'outil supérieure (9) dans la position de retrait (15) ;
d) la première unité de fermeture (12) est fermée ;
e) sur une seconde voie de guidage (13) reliée à celle-ci, s'étendant transversalement à la première voie de guidage (14), la première unité de fermeture (12) est déplacée vers son poste de soufflage (16) alors que de préférence, la seconde unité de fermeture (12) est simultanément déplacée de son poste de soufflage (17) au poste de retrait (15) ;
f) alors que la plaque de fermeture inférieure (2) avec la moitié d'outil inférieure (8) de la seconde unité de fermeture (12) est déplacée sous la tête d'extrusion (10) et la prochaine ébauche extrudée est placée dans la moitié d'outil inférieure (8) et la plaque de fermeture inférieure (2) est redéplacée dans la position de retrait (15), l'ébauche est soufflée dans la première unité de fermeture (12) sur le premier poste de soufflage (16) pour former le corps tubulaire ;
g) la seconde unité de fermeture (12) est déplacée vers le second poste de soufflage (17) alors que la première unité de fermeture (12) est déplacée de préférence en même temps vers le poste de retrait (15) ;
h) la première unité de fermeture (12) est ouverte et le corps tubulaire est retiré.
